# EUROPEAN PATENT APPLICATION

(11) **EP 4 059 642 A1**
(43) Date of publication of application: **21.09.2022**
(21) Application number: 21163240.1
(22) Date of filing: 17.03.2021
(51) Int. Cl.: B23B 1/00, B23B 27/14, B23Q 15/16

(54) **METHOD FOR A CNC-LATHE**

(71) Applicant: AB Sandvik Coromant, 811 81 Sandviken (SE)
(72) Inventor: BOING, Denis, 811 81 Sandviken (SE)
(74) Representative: Sandvik

(57) **Abstract**

The invention relates to a turning method for a CNC lathe involving at least two machining steps wherein a cutting element (1, 11) is re-arranged between the machining steps such that a nominal rake angle (γₙ) is changed. Thereby, the effective tool life may be increased and a high quality of the machined surfaces, and a stable cutting process, may be achieved even with a worn tool. The invention also relates to a system and to a computer program for performing the method.

## Description

### TECHNICAL FIELD

The present invention belongs to the technical field of metal cutting. More specifically the present invention belongs to the field of turning.

### BACKGROUND ART

In metal cutting, turning is a common machining operation. CNC-lathes are commonly used. When machining particularly hard materials, it is common to use turning tools having a cutting element made of cubic boron nitride (CBN) or ceramic. Even if such materials have a high wear resistance, for example when compared to cemented carbide cutting tools, wear on the rake face and flank face of the cutting element will eventually limit the usability of the cutting element, or even lead to tool breakage, such that the cutting element must be replaced. For efficiency and economic reasons, it may be desirable to use a cutting element for as long as possible. Hence, efforts have been made to reduce the wear on cutting elements. As an example, EP2015881 discloses a CBN tool component that comprises a secondary layer on the rake face that has a higher resistance to crater formation. However, even if the tool life may be somewhat prolonged, such layer will not prevent tool wear from eventually deteriorate the cutting properties of the CBN tool.

Hence, there is a need to further increase the tool life of a cutting element used in a turning process.

### SUMMARY

It is an objective of the present invention to mitigate the shortcomings of the prior art and to provide a method that increases the tool life, i.e. the time a cutting element can be used for machining. A further objective is to provide a method that consistently results in machined surfaces of high quality. A further objective is to obtain a stable cutting process.

Thus, according to a first aspect, the invention relates to a turning method for a CNC lathe, wherein the method comprises the steps of:
- providing a workpiece, rotatable in a rotation direction around a rotational axis thereof;
- providing a turning tool extending along a tool axis, wherein the turning tool comprises a cutting element including a rake face, a clearance face and a cutting edge formed at the border between the rake face and the clearance face, wherein the cutting element is arrangeable in different orientations with respect to the workpiece, each orientation being defined by a nominal rake angle with respect to the surface of the workpiece and wherein the cutting element has, at a point of contact between the cutting edge and the workpiece, an effective rake angle and an effective clearance angle that depend on the wear of the cutting element;
- arranging the cutting element with respect to the workpiece at a first orientation defined by a first nominal rake angle resulting in a first effective rake angle and a first effective clearance angle;
- machining, in a first machining step, the workpiece with the cutting element in the first orientation;
and, after the first machining step,
- re-arranging the cutting element with respect to the workpiece, or with respect to another workpiece to be machined, at a second orientation defined by a second nominal rake angle resulting in a second effective rake angle and a second effective clearance angle, wherein the second nominal rake angle is different from the first nominal rake angle; and
- machining, in a second machining step, the workpiece, or the another workpiece, with the cutting element in the second orientation.

Thereby, the effective tool life may be increased and a high quality of the machined surfaces, and a stable cutting process, may be achieved even with a worn tool. Surface quality may for example refer to surface roughness or surface integrity, e.g. related to microstructural modifications caused by the machining process.

The turning method is for a CNC-lathe i.e. a computer- or computerized numerical control lathe, i.e. any CNC-machine suitable for turning such as e.g. a turning lathe, a multitask machine, a turn-mill machine, or a sliding head machine. The workpiece may be a metal workpiece comprising an external surface, which is a radially outer surface. The radially outer surface is facing away from the rotational axis. The turning method may be used for turning of the radially outer surface, i.e. external turning. The workpiece extends between a first end and a second end.

The workpiece may be of hardened steel, for example hardened steel at 40 HRC or above. Alternatively, the workpiece may be a super alloy, such as a heat resistant super alloy (HRSA), for example a nickel based alloy.

The workpiece may be clamped by clamping means. The clamping means holds the workpiece and are at least partially controlled and driven by a motor or a spindle. The clamping means may be in the form of a collet chuck, a face driver, or a 3-jaw chuck, and may comprise a tail stock. The headstock end of the machine is preferably located at the first end of the workpiece. A second end of the workpiece, opposite to the first end of the workpiece, may be a free end. Alternatively, the second end is in contact with a tail stock or a second chuck.

The turning tool comprises a forward end and an opposite rear end in the form of a coupling portion. The coupling portion is connected to the CNC-lathe, more specifically to a machine interface of the CNC-lathe, such as a machine spindle or a tool revolver turret or a tool post.

The coupling portion may have a square or rectangular shape in a cross section. The coupling portion may be conical or substantially conical such as preferably according to ISO standard 26623-1. In this context, a truncated cone is a cone-like shape. In this con-text, the tapered portion which forms the rear part of the ISO standard 26623-1 coupling is a cone-like shape. The coupling portion extends along a coupling axis. The coupling portion is preferably conical such that said cone or cone-like shape is symmetrical or substantially symmetrical around the coupling axis. A three-fold symmetry is in this context considered to be symmetrical. A cross section area of said cone or cone like shape prefer-ably decreases in a rearward direction. The coupling portion may be in the form of a hollow taper shank such as HSK, according to DIN 69893.

The coupling axis corresponds to a tool axis, or a center axis, of the turning tool, defining a longitudinal axis of the turning tool.

The turning tool comprises a cutting element. The cutting element is preferably made from a wear resistant material, for example cubic boron nitride (CBN), polycrystalline cubic boron nitride (pCBN), ceramic or cemented carbide. The cutting element may be implemented as a part of a turning tool, for example as an integral part of such turning tool, or as a replaceable and/or indexable cutting insert or turning insert that is mountable to the turning tool, for example in an insert pocket in which the cutting insert may be fastened by any suitable fastening means, such as a screw or other means for securely holding the cutting insert within the insert pocket. The cutting element may also be considered as a part of such cutting insert. For example, the cutting element may be a CBN cutting tip brazed onto a cemented carbide carrier, together forming a replaceable cutting insert.

The cutting element comprises a top surface including a rake face or a rake surface. The cutting element further comprises a clearance face or clearance surface adjoining the rake face. A cutting edge is formed at the border between the rake face and the clearance face. The cutting edge, or a portion of the cutting edge, generates the machined surface. The cutting edge may have a convex shape in a top view, e.g. it may be a nose cutting edge, for example in the form of a circular arc. The cutting element, in particular if in the form of a cutting insert, may in a top view have a rhomb shape, a triangular shape, an octagonal shape, a square shape, a round shape or a polygon shape.

The top surface may be flat. Alternatively, the surface may be non-flat or non-planar. For example, the surface may comprise one or more chip breaking means, in the form of one or more protrusions and/or de-pressions. Moreover, a chamfer may be formed in the top surface, such that the cutting edge is defined at the border between the clearance face and such chamfer surface. In such cases, for the purposes discussed in this disclosure, the chamfer surface corresponds to the rake face, i.e. when considering a nominal rake angle and/or an effective rake angle.

When machining, the workpiece is rotated in the rotation direction and the turning tool is controlled such that the cutting edge of the cutting element is brought into engagement with the rotating workpiece. The machining performed during the first machining step comprises machining the workpiece. The first machining step may also comprise machining of further workpieces.

The machining may involve any method which results in a rotationally symmetrical surface, where a workpiece rotates. The method can therefore by used not only in single point turning, but also in other turning operations, such as turning operations where the contact point or contact area between the cutting edge and the workpiece travels along the cutting edge during machining. For example where there is a linear feed movement transversely with respect to the axis of rotation.

During machining, the cutting element is subjected to wear, in particular crater wear formed on the rake face and flank wear formed on the clearance face. In particular, for a CBN cutting element used in hard part turning, the microgeometry of the cutting element is radically modified as a function of the wear progress during the life of the cutting element. As an example, if using a CBN cutting element with chamfer, having a negative rake angle initially, the effective rake angle will eventually become positive due to crater wear on the cutting element. In the end, the cutting element will break, or it will not provide acceptable machining results, and must be replaced. It has been discovered by the inventor that a cutting element may assume a tribological stable condition after a certain time of machining, a condition that is maintained for the remainder of the life of the cutting element. For example, for a CBN cutting element with a chamfer, such tribological stable condition may appear after approximately 30% of the estimated tool life. In the tribological stable condition, the effective rake angle and the effective clearance angle, as well as the cutting edge radius, are normalized. As a consequence, also the wedge angle is normalized, thus not changing significantly during the stable tribological condition. Accordingly, even if the crater wear and flank wear might increase during this stable state, the wear progression is such that the shape of the flank and the crater do not change, i.e. the effective rake angle and the effective clearance angle remain substantially the same. It was found that the cutting edge line of the cutting element maintained a good integrity also in the stable tribological condition, despite the significantly changed effective rake angle compared to the original rake angle. However, it was also found that in the stable tribological condition the effective clearance angle is often zero, or close to zero, i.e. for a significant time of the tool life, and that this may potentially result in various disadvantageous effects. For example, due to an increased contact between the clearance face and the workpiece, the integrity of the machined surface may change. The inventor realized that the integrity of the machined surface could be improved (or maintained), and the effective tool life increased, if changing the nominal rake angle prior to, or shortly after, reaching the stable tribological condition.

Formulated differently, the inventor has found a way or method which allows a cutting element, which conventionally would be considered worn out, to be used for a longer time. This way includes rearranging the cutting element vis-à-vis the workpiece. The inventor has found that the method works especially well when turning hardened steels or other hard metals, such as e.g. Ni-based super alloys, using CBN or pCBN cutting elements, i.e. cutting inserts or turning insert comprising CBN or pCBN.

As used herein, a "nominal rake angle" refers to the angle of the original rake face relative a plane perpendicular to the machined surface, not considering any variations in the geometry of the cutting element (such as variations caused by wear). In this context, the nominal rake angle could also be considered as a "system rake angle", i.e. defined by the original geometry of the cutting element in the specific machining setup (e.g. orientation and position of CNC lathe, tool holder, etc., with respect to the workpiece). Correspondingly, a "nominal clearance angle" refers to clearance of the original, non-worn, clearance face with respect to the surface of the workpiece, i.e. the desired clearance, not taking tool wear into consideration. In contrast, as used herein, an "effective rake angle" is the true rake angle in effect when machining, i.e. the actual cutting angle, and this will depend on local variations of the geometry of the rake face. Correspondingly, an "effective clearance angle" refers to the actual clearance of the clearance face relative the machined surface. The effective rake angle and the effective clearance angle are both affected by wear of the cutting element. For example, the effective rake angle may increase compared to the original rake angle due to crater wear formed on the rake face, whereas the effective clearance angle may decrease due to flank wear. Thus, when machining with a non-worn cutting element, the effective rake angle and the effective clearance angle will initially correspond to the nominal rake angle and the nominal clearance angle, respectively. But as soon wear starts to form, affecting these angles, the effective angles will deviate from the corresponding nominal angles.

Hence, during the first machining step, wear on the cutting element will affect the actual geometry of the rake face and clearance face. Due to this, the effective rake angle may increase while the effective clearance angle may decrease. The nominal second rake angle is different from the first nominal rake angle in order to compensate for such wear. In particular, re-arranging the cutting element to the second orientation, i.e. modifying the nominal rake angle, may increase the effective clearance.

To achieve this, the second nominal rake angle that is used in the second machining step may be smaller than the first nominal rake angle used in the first machining step.

Reducing the nominal rake angle will obviously result also in a decrease of the effective rake angle, at least if compared to the effective rake angle present right before re-arranging the cutting element. However, the second effective rake angle may still be greater than the first effective rake angle since the wear caused by the first machining step has caused an increase of the effective rake angle compared to the first effective rake angle.

It is also envisaged that the first and second effective rake angles are the same, i.e. that the change in effective rake angle caused by wear from the first machining step corresponds to the difference between the first and the second nominal rake angles. However, this may often not be the case if the first machining step involves using a new, non-worn, cutting element at first, since the increased rake angle due to crater wear would often be higher than what is desirable to compensate for when re-arranging the cutting element. On the other hand, if the first machining step begins with an already worn cutting element that had been re-arranged from a previous state in which a stable tribological condition had been reached, and the first machining step progresses until a new stable tribological condition is reached, it is very possible that the first effective rake angle would correspond to the second effective rake angle, i.e. such that the effective rake angle is restored by the change of nominal rake angle. However, the original effective rake angle for a non-worn cutting element might not be desirable or possible to restore.

By reducing the nominal rake angle, the effective clearance will be increased, thus reducing the contact between the flank of the cutting element and the workpiece. When the contact area between the flank of the cutting element and the workpiece increases, the distribution of the passive force and feed force will change, resulting in an increase of the machined component white layer thickness, which is related to undesirable microstructural modifications on the machined surface. Thus, by increasing the clearance, a more stable machining process will be obtained and the white layer formation will be reduced, thus providing an improved quality of the machined surface.

The second effective clearance angle may correspond to, or substantially correspond to, the first effective clearance angle. In other words, the difference between the first and second nominal rake angles may correspond to the change of the effective clearance angle that was caused by the first machining step. For example, the first machining step may have caused a flank wear on the cutting element such that the effective clearance angle was reduced to zero, i.e. wherein rubbing occurs between at least a part of the clearance face and the workpiece. Then, by letting the difference between the first and second nominal rake angles correspond to a desired clearance angle, for example the clearance angle present for a non-worn cutting element, the desired (e.g. original) effective clearance angle may be restored by re-arranging the cutting element. In other words, the original effective clearance may be restored by modifying the nominal rake angle.

The second nominal rake angle may differ from the first nominal rake angle by 2-10 degrees. In many applications, this would be sufficient for restoring the clearance while maintaining a good cutting performance, and, by not changing the nominal rake angle too much, it will be possible to re-arrange the cutting element multiple times, further increasing the total life of the cutting element. The second nominal rake angle may differ from the first nominal rake angle by 4-8 degrees, such as, for example, by 6 degrees, which may be beneficial for at least some applications.

The step of re-arranging the cutting element may be performed when the cutting element is out of cut. As used herein, "out of cut" refers to a state in which the cutting element is not in engagement with the workpiece. Such state may occur between machining of two different workpieces or between two different passes of a turning operation on a workpiece. Accordingly, the first machining step may comprise a first set of one or more machining operations and the second machining step may comprise a second set of one or more machining operations, wherein the step of re-arranging the cutting element may be performed between these sets of machining operations, e.g. between machining two different workpieces, in which case the machining operations in the second set are not overlapping the machining operations in the first set.

In this context, a machining operation may be considered as an operation performed on a workpiece and which may comprise one or more passes with the turning tool.

As mentioned, the step of re-arranging the cutting element may be performed between two different passes of a machining operation. In this case, the first and the second machining steps may each comprise different parts of a single turning operation. The first machining step may then, for example, comprise one or more complete machining operations (e.g. machined components) and a first part of the specific machining operation, and the second machining step may comprise a second part of the specific machining operation as well as subsequent machining operations and/or parts of subsequent machining operations.

It is also envisaged that the re-arranging of the cutting element is effected during machining, e.g. during a pass of a turning operation. Accordingly, the re-arranging of the cutting element may involve a step-wise or continuous re-arrangement carried out during machining. This may be useful for example when turning big HRSA components, wherein the cutting element may wear out in a single pass, potentially rendering the surface integrity of the component to be different at the beginning of the cut compared to at the end of the cut.

The duration of each machining step may be selected based on a pre-defined time period that the cutting element has been in cut. Thus, the re-arranging of the cutting element may be done after a specified and pre-defined time period, for example a certain number of minutes that the cutting element has been active (i.e. "time in cut"). Hence, the first machining step may involve machining a specific time, not considering the actual number of machining operations that have been performed. The machining step may also be defined as comprising the machining operation, or the pass of a machining operation, during which the pre-defined time period ended, i.e. such that the current machining operation or pass is finished before the cutting element is re-arranged. Instead of a pre-defined time, the duration may alternatively be selected based on a pre-defined cutting length. As a further alternative, each machining step may relate to a certain number of machining operations, i.e. a machining step may be defined as comprising machining of a pre-defined number of workpieces. Accordingly, the re-arrangement of the cutting element may be done after a specific number of components have been machined.

Irrespective of what parameter is used to determine when the re-arranging of the cutting element is to be done, each of the machining steps may comprise machining of multiple different workpieces.

Arranging and re-arranging the cutting element between a first and second orientation may be accomplished in various ways. According to some embodiments, the relative position between the workpiece and the tool axis may be adjusted. For example, the point of engagement between the cutting element and the workpiece may be adjusted by moving the tool axis with respect to the workpiece in a direction transverse to the rotational axis, from a first tool axis position to a second tool axis position, wherein the tool axis in the second tool axis position is parallel to, but not in line with, the tool axis in the first tool axis position.

Thus, the direction of engagement of the cutting element with respect to a surface of the workpiece may be adjusted by changing the orientation of the tool axis with respect to the workpiece, and in particular by translation of the tool axis. In particular, in view of a cartesian coordinate system with respect to a lathe, in which the Z-axis refers to a direction along the rotational axis of the workpiece, the X-axis refers to a radial direction with respect to the workpiece (i.e. towards or away from the rotational axis), and the Y-axis refers to a direction orthogonal to the plane defined by the Z- and X-axes, the translation may comprise a motion along the Y-axis. Accordingly, such embodiments require the use of a CNC lathe that has the capability of moving the turning tool along the Y-axis, such as, for example, certain types of multi-task machines or a mill-turn machines. If using such a CNC lathe, the step of re-arranging the cutting element may thus be achieved via the machine control system. Such re-arrangement of the cutting element may be both accurate and relatively easy to implement since it does not require any specially designed turning tools or tool holders.

According to some embodiments, the tool axis is moved from the first tool axis position to the second tool axis position by a first distance in a first direction.

In view of a coordinate system as defined above, the first direction may be along the Y-axis. Thus, if the tool axis is directed along, or is parallel to, the X-axis, the first direction may correspond to a direction that is transverse both to the tool axis and the rotational axis of the workpiece. In particular, the first direction may correspond to, or substantially correspond to, the direction in which the workpiece rotates, i.e. the tangential direction of motion of the workpiece at a point of contact between the cutting element and the workpiece. Formulated differently, the first direction may be along the Y-axis away from a direction towards which the rake face or top surface of the cutting element faces.

In other words, the movement of the tool axis may have a component along the Y-axis, and the movement may be directed along, or substantially along, the rotation direction of the workpiece at the point of contact between the cutting element and the workpiece, i.e. away from the direction towards which the rake face or top surface of the cutting element faces.

Thereby, the cutting element will be re-arranged to a position relative the workpiece in which the nominal rake angle is decreased and the effective clearance angle is increased.

The tool axis may be moved not only along the Y-axis, but also along the X-axis, to compensate for the change in cutting depth caused by the movement along the Y-axis. For example, when the tool axis is moved along the Y-axis a certain distance for modifying the nominal rake angle, the tool axis may be moved a distance also in the X-axis direction for maintaining the same cutting depth.

The tool is not necessarily moved linearly between the first and second orientations, or moved in two consecutive linear movements (e.g. first moved in the Y-axis direction and then moved in the X-axis direction) but may also be moved along an arc, e.g. along the periphery of the workpiece.

The first distance moved in the first direction, or the distance moved along the Y-axis as a result thereof, may be between 0.03r and 0.18r, such as between 0.07r and 0.14r, where r is the radius of the workpiece. A movement between 0.03r and 0.18r may provide a change of the nominal rake angle by 2-10 degrees, at least if made close to the center of the workpiece, i.e. in the vicinity of the X-Z plane. As an example, said first distance, or distance moved along the Y-axis as a result thereof, may be approximately 0.1 times the radius of the workpiece, for example between 0.09r and 0.11r, which may correspond to a change in the nominal rake angle by approximately 6 degrees.

An alternative method for re-arranging the cutting element that does not require translation of the tool axis could be to mount the cutting element in different turning tools or tool holders depending on what orientation that is desired. For example, prior to the first machining step, the cutting element may be mounted in a turning tool body that is designed such that the cutting element will, when the turning tool is mounted in the CNC lathe, obtain the first orientation with respect to the workpiece. To re-arrange the cutting element prior to the second machining step, the cutting element may be mounted in another tool body that is designed such that the cutting element will, when the turning tool is mounted in the CNC lathe, obtain the second orientation with respect to the workpiece.

It is also envisaged that the step of re-arranging the cutting element at a second orientation may comprise changing the direction of engagement of the cutting element with respect to a surface of the workpiece by tilting the tool axis, for example by rotational movement of a tool spindle to which the turning tool is connected, or by controlling the angle of a tool turret to which the turning tool is connected. Alternatively, the cutting element may be tilted with respect to the tool axis. For example, if using a tiltable or otherwise adjustable turning tool or tool holder, the arranging and re-arranging of the cutting element may be achieved by such means. For example, a tool holder that is tiltable, or a tool wherein a part comprising the cutting element is tiltable, may be used. Such adjusting may be achieved by manual means or controlled by some kind of actuator, e.g. a remotely controlled actuator. The re-arranging of the cutting element by tilting of the tool axis, or by tilting the cutting element with respect to the tool axis, preferably comprises tilting by an angle which corresponds to a difference between a first and a subsequent nominal rake angle. If several steps of re-arranging, e.g. a third orientation, is performed by such tilting, the tilting angle for each step is preferably the same or substantially the same, i.e. within +/- 5 degrees. For each step, the nominal rake angle is gradually smaller or more negative.

According to some embodiments, the turning method further comprises the steps of, after the second machining step,
- re-arranging the cutting element with respect to the workpiece, or with respect to another workpiece to be machined, at a third orientation defined by a third nominal rake angle resulting in a third effective rake angle and a third effective clearance angle, wherein the third nominal rake angle is different from each of the first and the second nominal rake angles,
- machining, in a third machining step, the workpiece, or the another workpiece, with the cutting element in the third orientation.

Thus, the re-arranging of the cutting element may be repeated multiple times. The second nominal rake angle may be smaller than the first nominal rake angle, and the third nominal rake angle may be smaller than the second nominal rake angle. In other words, the third nominal rake angle may be smaller than both the first nominal rake angle and the second nominal rake angle. The difference between the first nominal rake angle and the second nominal rake angle may be the same as the difference between the second nominal rake angle and the third nominal rake angle. That is, the nominal rake angle may be changed by the same amount each time the cutting element is re-arranged. The re-arranging may be repeated more than two times, for example three, four or five times, or even more. Each time the cutting element is re-arranged, the effective clearance angle may be restored to what it was at the beginning of the machining step. Thereby, the effective life of the cutting element may be prolonged even further, with maintained quality of the machined surfaces.

According to some embodiments relating to multiple re-arrangements of the cutting element for which the step of re-arranging the cutting element at a second orientation comprises moving the tool axis from a first tool axis position to a second tool axis position by a first distance in a first direction, the step of re-arranging the cutting element at a third orientation may comprise moving the tool axis by a second distance in the first direction from the second tool axis position away from the first tool axis position to a third tool axis position.

By moving the tool axis away from the first and the second tool axis positions, the nominal rake angle will be further reduced, and the effective clearance angle will be increased compared to the effective clearance present immediately before re-arranging the cutting element at the third orientation. For example, the effective clearance may be restored to what it was immediately after re-arranging the cutting element at the second position. In other words, the third effective clearance angle may correspond to the second effective clearance angle and/or the first effective clearance angle.

The second distance may be the same as, or smaller than, the first distance.

The change of the nominal rake angle caused by a translation of the tool axis depends on the distance, along the Y-axis, from the rotational center of the workpiece. For example, close to the center, a greater translation along the Y-axis will be required to achieve the same nominal rake angle change as for a tool axis translation taking place farther from the center.

Accordingly, as an example in view of this embodiment, if a first machining step is performed with the cutting element located in the X-Z plane, the nominal rake angle change would be the same for two subsequent re-arrangements of the cutting element only if the second distance is smaller than the first distance.

However, for many applications and workpiece dimensions, it may be possible to ignore this difference, i.e. it may be sufficient to move the tool axis the same distance along the Y-axis when re-arranging the cutting element. In other words, the second distance may be the same as the first distance. This may also be the case if, for example, the first machining operation is performed above the center of the workpiece, the second machining operation is performed at the center, and the third machining operation is performed below the center. Then both translations along the Y-axis may be of the same magnitude for achieving corresponding nominal rake angle changes.

According to a second aspect of the invention, a system is provided that comprises a CNC lathe, a processor and a turning tool including a cutting element, wherein the system is configured to perform the method according to the first aspect of the invention. The processor may be an integrated part of the CNC lathe, or operatively coupled to the CNC lathe, and may be configured to execute a computer program triggering at least some of the steps of the method to be performed. The system may further comprise a memory for storing such computer program.

Hence, according to a third aspect, the invention relates to a computer program having instructions which when executed by a system according to the second aspect of the invention cause the system to perform the method according to the first aspect of the invention.

Thus, the methods described herein may be embodied by a computer program or a plurality of computer programs, which may exist in a variety of forms. For example, they may exist as software programs comprised of program instructions for performing some of the steps of the methods, and may be embodied on a computer readable medium. In other words, the re-arranging of the cutting element may be done in accordance with instructions as defined in a computer program. These instructions may for example include parameters such as the intervals for re-arranging the cutting element and the extent of each such re-arranging. The optimal values for these parameters may be defined based on experience of machining similar components and may for example be input by the end-user, found in look-up tables or similar. Alternatively, algorithms may be used for calculating the optimal parameters based on input from a user, for example input relating to the kind of insert that is used, the kind of component that is to be manufactured and information on the "normal" wear when manufacturing such component, e.g. the expected tool life when not using a method according to the invention. The expected tool life may for example be defined as machining time or number of components that are manufactured before the cutting insert is exchanged. Such algorithms may be based on prior knowledge of wear propagation when manufacturing different components and materials.

### BRIEF DESCRIPTION OF DRAWINGS

Fig. 1 illustrates a cutting insert with a CBN cutting element.
Fig. 2 shows a section of a non-worn cutting element during machining.
Fig. 3 illustrates a worn cutting element, when it has assumed a stable tribological condition.
Fig. 4 schematically illustrates the effect of changing a nominal rake angle of the cutting element.
Fig. 5 is a flowchart showing the steps of a turning method according to the invention.
Figs. 6A-6C schematically illustrate an embodiment of the turning method.
Fig. 7 is a graph illustrating the change of effective rake angle according to a test based on another embodiment of the turning method.
Fig. 8 is a graph referring to the same test as fig. 7, illustrating the progression of flank wear of the cutting element.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

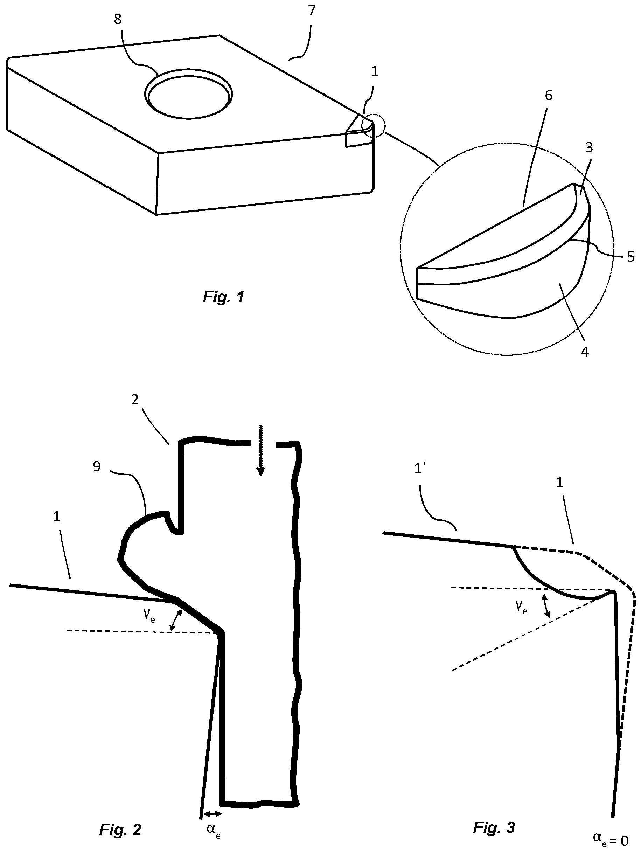

Fig. 1 illustrates a cutting insert 7 having a CBN cutting element 1 brazed thereto. The cutting insert is in this example rhomb-shaped and has a fastening hole 8 facilitating mounting of the insert within an insert pocket of a turning tool (not shown). A part of the cutting element is shown in an enlarged view illustrating a top surface 6 including a chamfer 3 corresponding to a rake face of the cutting element, and a clearance face 4. Between the chamfer 3 and the clearance face 4, a cutting edge 5 is formed.

Fig. 2 shows a section of the cutting element 1 when machining a metal workpiece 2, more precisely during a turning operation in which chips 9 are formed and thus material removed from the workpiece. The cutting element is arranged in a turning tool mounted to a CNC lathe, and oriented with respect to the workpiece at a nominal rake angle γ_{n_1} and a nominal clearance angle α_{n_1}. The cutting element 1 is in a non-worn state, i.e. before any crater wear or flank wear has begun to form on the rake face and clearance face, respectively. In this state, the effective rake angle γₑ and the effective clearance angle αₑ correspond to the nominal rake angle γ_{n_1} and the nominal clearance angle α_{n_1}, respectively. As seen in the figure, the initial rake angle for this cutting element is negative.

Fig. 3 illustrates a worn cutting element 1' after it has assumed a stable tribological condition or state. In this condition, the effective rake- and clearance angles do not change significantly even when the wear propagates further. However, as can be seen in the figure, the effective rake angle γₑ has increased due to crater wear (and is now positive) and the effective clearance angle αₑ has been reduced to zero due to flank wear. The original, non-worn, cutting element 1 is indicated with dashed lines. This stable state may be assumed rather early, for example as early as after 30% of the total expected tool life, and will continue for the remainder of the tool life. However, the integrity of the machined surface will be affected, partly because increased contact between the clearance face and the workpiece.

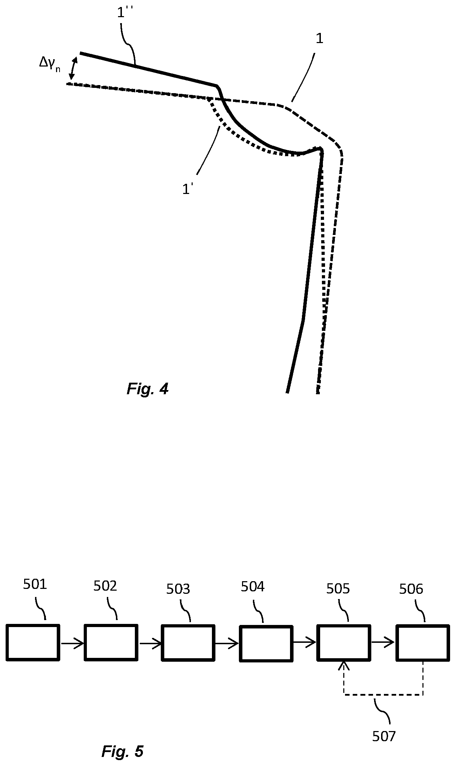

Fig. 4 schematically illustrates the effect of changing a nominal rake angle of the cutting element. When the stable tribological state has been assumed, or before it has been assumed, the nominal rake angle may be changed in order to restore the effective clearance angle. In fig. 4, the original non-worn cutting element is shown in dashed lines, the worn cutting element 1' is shown in dotted lines, and the re-arranged worn cutting element 1" is shown in solid lines. In this example, a re-arrangement resulting in a nominal rake angle change Δγₙ has been effected by tilting the cutting element. However, as will be described, the re-arrangement of the cutting element may also be achieved by other means.

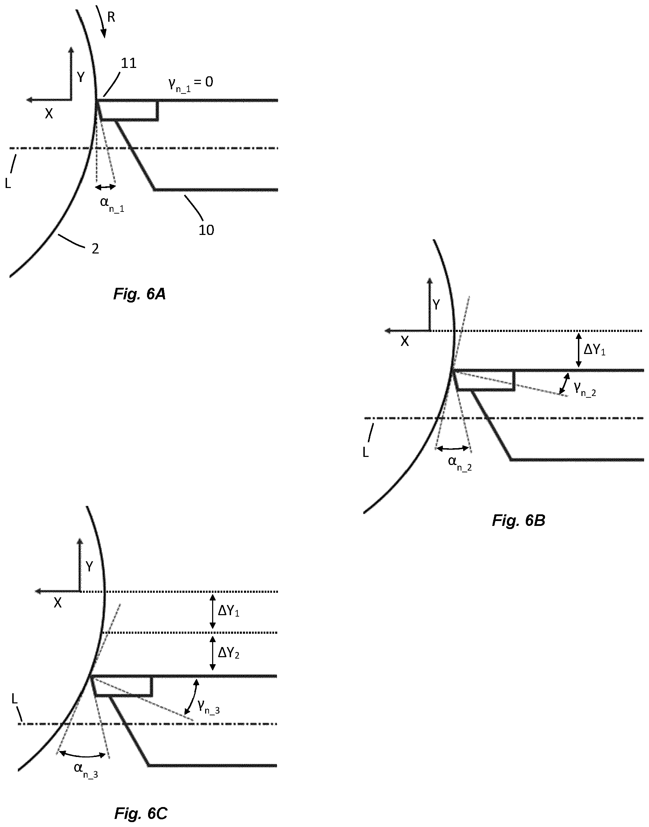

In the following, a turning method for a CNC lathe will be described with reference to fig. 5, which is a flowchart indicating the steps of the turning method, and with reference to figs. 6A-6C which are schematic illustrations of an embodiment of the method.

In step 501, a workpiece 2, rotatable in a rotation direction R around a rotational axis thereof, is provided.

In step 502, a turning tool 10 is provided to extend along a tool axis L, in this case parallel to the X-axis of the lathe. The turning tool 10 comprises a cutting element 11 in the form of a CBN cutting insert. In contrast to the cutting element 1 illustrated in figs. 1-4, the cutting element 11 shown in figs. 6A-6C has no chamfer formed between the cutting edge and the top surface of the cutting element. The cutting element is arrangeable in different orientations with respect to the workpiece, each orientation being defined by a nominal rake angle γₙ with respect to a line perpendicular to the surface of the workpiece at the point of contact between the cutting edge and the workpiece.

In step 503, the cutting element is arranged with respect to the workpiece at a first orientation, illustrated in fig. 6A, defined by a first nominal rake angle γ_{n_1} (which in this example is zero) and a nominal clearance angle α_{n_1}. If the cutting element 11 shown in fig. 6A is a non-worn cutting element, the nominal rake angle and the nominal clearance angle would at first correspond to the effective rake angle and the effective clearance angle, respectively. Figs. 6B and 6C illustrate subsequent machining steps in which wear may have formed on the rake face and on the clearance face such that the effective angles may differ from the nominal angles. However, to improve visibility and facilitate comprehensibility, the wear and the effective angles are not indicated in figs. 6A-6C.

In step 504, the workpiece is machined with the cutting element in the first orientation.

In step 505, the cutting element is re-arranged with respect to the workpiece, or with respect to another workpiece to be machined, at another orientation, which is illustrated in fig. 6B. The cutting element 11 is thus arranged with a different nominal rake angle γ_{n_2} and a different nominal clearance angle α_{n_2}. In this example, the new nominal rake angle γ_{n_2} is negative, i.e. smaller than the previous nominal rake angle γ_{n_1}. The re-arrangement of the cutting element 11 has been achieved by translative movement of the turning tool 10 with respect to the workpiece 2. The movement has a component in the Y-axis direction, i.e. such that the tool axis L is displaced in the Y-axis direction by a distance ΔY₁. As a consequence, the nominal rake angle has decreased while the nominal clearance angle has increased (i.e. γ_{n_2} < γ_{n_1} , α_{n_2} > α_{n_1}).

In step 506, the workpiece, or the another workpiece, is machined with the cutting element in the re-arranged orientation.

As indicated by arrow 507 in fig. 5, the steps of re-arranging the cutting element at a different orientation and machining the workpiece (or another workpiece) with the re-arranged cutting element may be repeated several times.

Accordingly, in fig. 6C the cutting element 11 has been re-arranged once again by translating the tool axis L in a direction having a component in the Y-axis direction, such that the tool axis L is displaced in the Y-axis direction by a distance ΔY₂. Thereby, the cutting element 11 is now arranged with a nominal rake angle γ_{n_3} which is smaller or more negative than the previous nominal rake angle γ_{n_2} and with a nominal clearance angle α_{n_3} which is greater than the previous nominal clearance angle α_{n_2}.

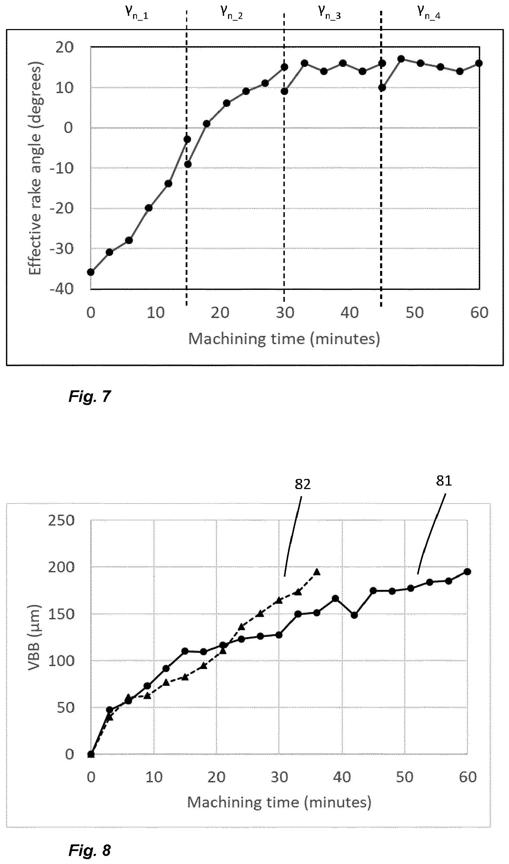

Fig. 7 illustrates how the effective rake angle of a cutting element may change during machining and how the effective rake angle is affected by multiple re-arrangements of the cutting element. The graph shows the results of a test wherein four differently designed tool holders (providing different nominal rake angles γ_{n_1}, γ_{n_2}, γ_{n_3} and γ_{n_4}) were used for re-arranging the cutting element in different orientations with respect to a workpiece. The cutting element used in this test was a CBN cutting element with a chamfer (i.e. similar to a cutting element as illustrated in fig. 1). The cutting element was initially arranged with respect to the workpiece such that the first nominal rake angle γ_{n_1} (and thus the initial effective rake angle γₑ) was -36 degrees, and the clearance angle (not shown in the graph) was 6 degrees. After 15 minutes of machining, the cutting element was re-arranged such that the nominal (and effective) rake angle was reduced by 6 degrees. Such re-arrangement was made again after 30 minutes of machining, and then again after 45 minutes of machining. Each of these re-arrangements, indicated in fig. 7 by dashed lines, resulted in an immediate decrease of the effective rake angle by 6 degrees. As seen in the figure, the first re-arrangement was made before a stable condition had been reached whereas the second and the third re-arrangements were made after such stable condition had been reached. In this example, the stable condition, in which the effective rake angle was approximately 15 degrees, was re-assumed fairly quick after the respective re-arrangements made at 30 and 45 minutes of machining.

The graph in fig. 8, showing the average width of flank wear VB_{B} on the vertical axis, illustrates the propagation of flank wear 81 (indicated by dots) for the cutting element in the test described above. A reference flank wear 82 (indicated by triangles) for a corresponding cutting element that was not re-arranged is also shown in the graph. As seen in fig. 8, when using the method according to the invention, the average width of flank wear VB_{B} is close to 200 µm after 60 minutes of machining whereas this level of flank wear is obtained already after 36 minutes of machining if not using the method.

## Claims

1. A turning method for a CNC-lathe, comprising the steps of:
- providing a workpiece (2), rotatable in a rotation direction (R) around a rotational axis thereof;
- providing a turning tool (10) extending along a tool axis (L), wherein the turning tool comprises a cutting element (1, 11) including a rake face (3), a clearance face (4) and a cutting edge (5) formed at the border between the rake face (3) and the clearance face (4), wherein the cutting element (1, 11) is arrangeable in different orientations with respect to the workpiece (2), each orientation being defined by a nominal rake angle (γₙ) with respect to the surface of the workpiece (2), and wherein the cutting element (1, 11) has, at a point of contact between the cutting edge (5) and the workpiece (2), an effective rake angle (γₑ) and an effective clearance angle (αₑ) that depend on the wear of the cutting element (1, 11);
- arranging the cutting element (1, 11) with respect to the workpiece (2) at a first orientation defined by a first nominal rake angle (γ_{n_1}) resulting in a first effective rake angle (γ_{e_1}) and a first effective clearance angle (α_{e_1});
- machining, in a first machining step, the workpiece (2) with the cutting element (1, 11) in the first orientation;
and, after the first machining step,
- re-arranging the cutting element (1, 11) with respect to the workpiece (2), or with respect to another workpiece to be machined, at a second orientation defined by a second nominal rake angle (γ_{n_2}) resulting in a second effective rake angle (γ_{e_2}) and a second effective clearance angle (α_{e_2}), wherein the second nominal rake angle (γ_{n_2}) is different from the first nominal rake angle (γ_{n_1}); and
- machining, in a second machining step, the workpiece (2), or the another workpiece, with the cutting element (1, 11) in the second orientation.

2. A turning method according to claim 1, wherein the second nominal rake angle is smaller than the first nominal rake angle.

3. A turning method according to any of the previous claims, wherein the second effective clearance angle corresponds to, or substantially corresponds to, the first effective clearance angle.

4. A turning method according to any of the previous claims wherein the second nominal rake angle differs from the first nominal rake angle by 2-10 degrees.

5. A turning method according to any of the previous claims, wherein the step of re-arranging the cutting element is performed when the cutting element is out of cut.

6. A turning method according to any of the previous claims, wherein the duration of each machining step is selected based on a pre-defined time period that the cutting element has been in cut.

7. A turning method according to any of the previous claims, wherein the step of re-arranging the cutting element at a second orientation comprises moving the tool axis with respect to the workpiece in a direction transverse to the rotational axis, from a first tool axis position to a second tool axis position, wherein the tool axis in the second tool axis position is parallel to, but not in line with, the tool axis in the first tool axis position.

8. A turning method according to claim 7, wherein the tool axis is moved from the first tool axis position to the second tool axis position by a first distance in a first direction.

9. A turning method according to any of the previous claims, further comprising, the steps of, after the second machining step,
- re-arranging the cutting element with respect to the workpiece, or with respect to another workpiece to be machined, at a third orientation defined by a third nominal rake angle resulting in a third effective rake angle and a third effective clearance angle, wherein the third nominal rake angle is different from each of the first and the second nominal rake angles,
- machining, in a third machining step, the workpiece, or the another workpiece, with the cutting element in the third orientation.

10. A turning method according to claims 8 and 9, wherein the step of re-arranging the cutting element at the third orientation comprises moving the tool axis by a second distance in the first direction, from the second tool axis position away from the first tool axis position to a third tool axis position.

11. A turning method according to claim 10, wherein the second distance is the same as, or smaller than, the first distance.

12. A turning method according to any of the previous claims, in which the cutting element comprises cubic boron nitride or polycrystalline cubic boron nitride.

13. A turning method according to any of the previous claims, in which the work piece is made of hardened steel having a hardness of 40 HRC or above or a heat resistant super alloy.

14. A system comprising
- a CNC lathe,
- a processor, and
- a turning tool including a cutting element,
wherein the system is configured to perform the method according to any of the claims 1-13.

15. A computer program having instructions which when executed by a system according to claim 14 cause the system to perform the method according to any of the claims 1-13.
